# EUROPEAN PATENT APPLICATION

(11) **EP 4 617 807 A1**
(43) Date of publication of application: **17.09.2025**
(21) Application number: 24213650.5
(22) Date of filing: 18.11.2024
(51) Int. Cl.: G05B 23/02

(54) **SYSTEM AND METHOD FOR ANOMALY REMEDIATION IN AN INDUSTRIAL PROCESS**

(30) Priority: 13.03.2024 IN 202441018136
(71) Applicant: ABB SCHWEIZ AG, 5400 Baden (CH)
(72) Inventor: CHATTERJEE, Somenath, 700051 Navanagar (IN); BHATTACHARYA, Aninda, 560100 Bangalore (IN); JAISWAL, Shruti, 560035 Bengaluru (IN); A, Devashree, 560059 Bangalore (IN); CHATTERJEE, Anindya, 560048 Bengaluru (IN); RAMACHANDRAN, Rajesh, 560076 BANGALORE (IN)
(74) Representative: Zimmermann & Partner Patentanwälte mbB

(57) **Abstract**

The present disclosure discloses a system and method for anomaly remediation in an industrial process or equipment is disclosed. The method comprises the step of monitoring, in real-time, a plurality of parameters associated with the industrial process or equipment in an industrial plant. The method further comprises the step of detecting at least one anomaly based on the plurality of parameters associated with industrial process or equipment. Then, the method comprises determining at least one optimum anomaly resolution recommendation from plurality of candidate anomaly resolution recommendations based on a model, in response to detecting the at least one anomaly. The method finally discloses the step of providing the at least one optimum anomaly resolution recommendation along with associated criticality information for the remediation of the at least one anomaly. The criticality information at least comprises projection of implementation results corresponding to respective optimum recommendation.

## Description

### TECHNICAL FIELD

The present disclosure generally relates to machine learning system and more particularly, relates to systems and methods for anomaly remediation in an industrial process or equipment.

### BACKGROUND

The fourth industrial revolution (Industry 4.0) is transforming the way manufacturer manufacture, improve and distribute their products. Manufacturers are integrating new technologies, including Industrial Internet of Things (IIoT), cloud computing and analytics, Artificial Intelligence (AI), and machine learning into their production facilities and throughout their operations. Industry 4.0 helps in optimizing the production process or cycle and getting insights of process and equipment conditions.

Automation of any industrial process broadly comprises of three facets: anomaly detection, fault diagnosis, and rectification. Presently, Industrial Analytics and AI Suite offers Asset Performance Management (APM) and system anomaly detection, which are developed and curated to take care of first two facets.

However, the above suites do not have any offering that complements the operator with right recommendation to bring the process back into normal state of operation from anomalous or faulty state. Given an anomalous state of the process is detected, the "rectification action" is still prevalently chosen by the concerned operator. Quality of the rectification action is heavily dependent on the learning from encountering similar situation in the past, learning from Online Training Simulator, process knowledge of the operator and qualification.

Further, in processes with large number of parameters, the operator may have to look the trends of multiple parameters, to identify similar historical situation. First, there is every chance that not-the-best action is chosen, because of operator's lack of experience or knowledge, approximating or copying the actions taken in not-so-similar precedence, emergence of new anomaly or situation, etc. Second, human identification of similar historical precedence and corresponding action is time-consuming and delays the decision on action, which defeats the purpose of early anomaly detection and leads to increased downtime in plants and financial loss.

In view of the foregoing discussion, there exists a need in the art to provide a method and a system which overcomes the stated problems by efficiently providing anomaly remediation for industrial process or equipment.

The information disclosed in this background of the disclosure section is only for enhancement of understanding of the general background of the invention and should not be taken as an acknowledgement or any form of suggestion that this information forms the prior art already known to a person skilled in the art.

### SUMMARY

The present disclosure overcomes one or more shortcomings of the prior art and provides additional advantages discussed throughout the present disclosure. Additional features and advantages are realized through the techniques of the present disclosure. Other embodiments and aspects of the disclosure are described in detail herein and are considered a part of the claimed disclosure.

In a non-limiting embodiment of the present disclosure, a method for anomaly remediation in an industrial process or equipment is disclosed. The method comprises the step of monitoring, in real-time, a plurality of parameters associated with the industrial process or equipment in an industrial plant. The method further comprises the step of detecting at least one anomaly based on the plurality of parameters associated with industrial process or equipment. Then, the method comprises determining at least one optimum anomaly resolution recommendation from plurality of candidate anomaly resolution recommendations based on a model, in response to detecting the at least one anomaly. The method finally discloses the step of providing the at least one optimum anomaly resolution recommendation along with associated criticality information for the remediation of the at least one anomaly. The criticality information at least comprises projection of implementation results corresponding to respective optimum recommendation.

In another embodiment of the present disclosure, a system for anomaly remediation in an industrial process or equipment is disclosed. The system includes a memory and at least one processor coupled to the memory. The at least one processor is configured to monitor, in real-time, a plurality of parameters associated with the industrial process or equipment in an industrial plant and detect at least one anomaly based on the plurality of parameters associated with industrial process or equipment. In response to detection of the at least one anomaly, the at least one processor is configured to determine at least one optimum anomaly resolution recommendation from plurality of candidate anomaly resolution recommendations based on a model. The at least one processor is then configured to provide the at least one optimum anomaly resolution recommendation along with associated criticality information for the remediation of the at least one anomaly. The criticality information at least comprises projection of implementation results corresponding to respective optimum recommendation.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and, together with the description, serve to explain the disclosed principles. The same numbers are used throughout the figures to reference like features and components. Some embodiments of device and or or methods in accordance with embodiments of the present subject matter are now described, by way of example only, and with reference to the accompanying drawings, in which:
**FIG. 1** illustrates an exemplary environment for recommending anomaly remediation for industrial process or equipment, in accordance with an embodiment of the present disclosure;
**FIG. 2(a)** illustrates various stages for anomaly remediation in an industrial process or equipment, in accordance with an embodiment of the present disclosure;
**FIG. 2(b)** illustrates a block diagram representation of digital twin simulator for generating optimum anomaly resolution recommendation, in accordance with an embodiment of the present disclosure;
**FIG. 2(c)** illustrates block diagram for training the reinforcement learning based model, in accordance with an embodiment of the present disclosure;
**FIG. 2(d)** illustrates optimum recommendation generation through reinforcement learning based model, in accordance with an embodiment of the present disclosure;
**FIG. 3** illustrates a block diagram representation of system for anomaly remediation in an industrial process or equipment, in accordance with another embodiment of the present disclosure;
**FIG. 4** is a flowchart illustrating a method for anomaly remediation in an industrial process or equipment, in accordance with an embodiment of the present disclosure; and
**FIG. 5** is a flowchart illustrating a method of training the model for anomaly resolution recommendation, in accordance with an embodiment of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration". Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device or system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The terminologies "industry", "industrial plant", "process industry" and "power plant" have been interchangeably used throughout the specification.

The terminologies "process", "industrial process" and "industrial equipment" have been interchangeably used throughout the specification.

The terminologies "model" and "reinforcement learning based model" have been interchangeably used throughout the specification.

The terminologies "recommendation" and "anomaly resolution recommendation" have been interchangeably used throughout the specification.

The terminologies "digital twin", "digital twin simulator", and "simulator" have been interchangeably used throughout the specification.

The present disclosure describes a method for anomaly remediation in an industrial process or equipment is disclosed. The method comprises the step of monitoring, in real-time, a plurality of parameters associated with the industrial process or equipment in an industrial plant. The method further comprises the step of detecting at least one anomaly based on the plurality of parameters associated with industrial process or equipment. Then, the method comprises determining at least one optimum anomaly resolution recommendation from the plurality of candidate anomaly resolution recommendations based on a model, in response to detecting the at least one anomaly. The method finally discloses the step of providing the at least one optimum anomaly resolution recommendation along with associated criticality information for the remediation of the at least one anomaly. The criticality information at least comprises projection of implementation results corresponding to respective optimum recommendation.

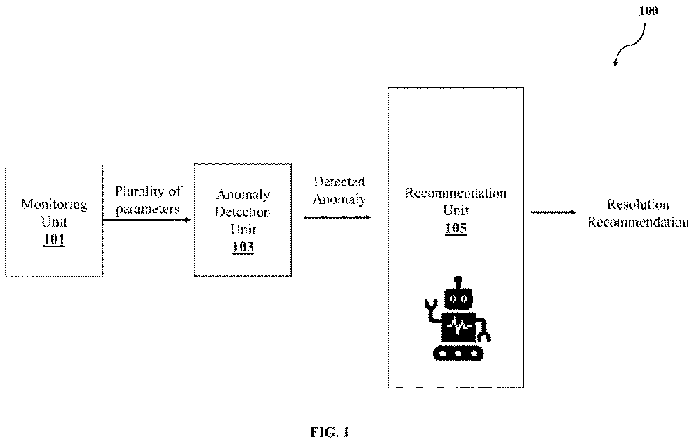

**FIG. 1** illustrates an exemplary environment for recommending anomaly remediation for industrial process or equipment, in accordance with an embodiment of the present disclosure.

In an embodiment of the present disclosure, the environment 100 may comprise a monitoring unit 101, an anomaly detection unit 103, and recommendation unit 105. The monitoring unit may comprise a plurality of sensors for monitoring a plurality of parameters associated with an industrial process or an industrial equipment. Thus, the plurality of parameters may include process parameters or equipment parameters.

The plurality of parameters is then fed to the anomaly detection unit 103, which compares the plurality of parameters with their respective threshold values or threshold range to identify a deviation in one or more parameters. The identified deviations are treated as detected anomaly in the industrial process or equipment.

The recommendation unit 105 may be configured to receive the detected anomaly and may be then configured to generate at least one anomaly resolution recommendation for resolving the detected anomaly. The recommendation unit 105 may comprise a model trained based on the reinforcement learning. In one non-limiting embodiment, the recommendation may commence with or without prior training of the model of the recommendation unit 105. The training of the model is discussed in further detail in below aspects.

In a non-limiting embodiment, the environment 100 may implemented in a process industry such oil and gas industry, chemical industry, mining industry, pulp and paper industry, metal or steel industry, food and beverage industry, battery manufacturing, etc. However, the industry is not limited to above example and may comprise any other industry known to a person skilled in the art.

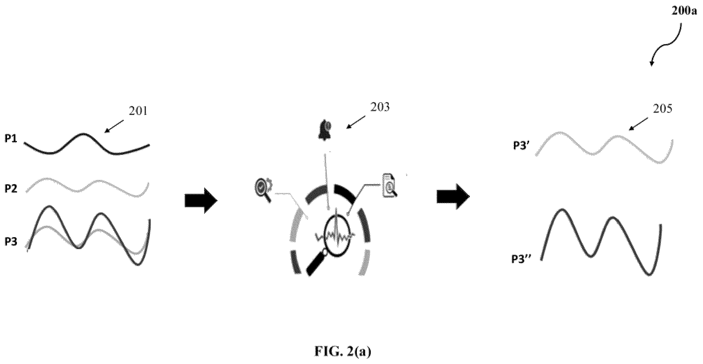

**FIG. 2(a)** illustrates various stages 200 for anomaly remediation in an industrial process or equipment, in accordance with an embodiment of the present disclosure.

At stage 201, the streamed data of a plurality of parameters P1, P2, and P3 may be monitored. In an exemplary embodiment, a plurality of parameters P1, P2, and P3 may comprise parameters such as, but not limited to, flow, pressure, and temperature. These parameters may be related to an industrial process or equipment.

At stage 203, an anomaly in parameter P3 of the streamed data is detected. The streamed data of parameter P3 indicates a deviation from the normal operating value. Once the anomaly is detected in parameter P3, an alert may be generated for the process operator to indicate the anomaly detected in the parameter P3. Further, a cause-and-effect analysis may be generated for process operator for taking suitable action and to restore the process back to the normal state.

At stage 205, at least one anomaly resolution recommendation may be generated for resolving the detected anomaly through a reinforcement learning based model. For example, anomaly resolution recommendation may comprise a recommendation of increasing the flow to 100m³ or hr for restoring the parameter to normal state as represented in P3'. Further, a result of not implementing the anomaly resolution recommendation is also presented to the operator through P3".

Thus, the process operator may implement at least one anomaly resolution recommendation from the reinforcement learning based model. The development and training of the reinforcement learning based model is discussed in detail in below aspects.

The development of the reinforcement learning model may comprise steps of identification of potential 'anomalies' associated with an industrial process, identification of potential 'recommendations' for each potential anomaly, identification of the best 'recommendation' for each potential anomaly, reinforcement learning based model training.

In an embodiment of the present disclosure, the reinforcement learning based model may be configured to generate recommendation to bring the industrial process back into normal state for given an anomaly state. In order to achieve the same, the model may be trained with as many anomalies as possible.

Therefore, the first step is to generate as many potential anomaly states as possible for training the model. In an embodiment, the potential anomaly states of a process may be taken from multiple sources such as historical data that comprises anomalies that occurred in the past, subject matter expertise, and process simulator. Thus, the potential anomaly states may comprise simulated and historical anomaly states.

In an exemplary embodiment, the digital twin (process simulator) and subject matter expertise may be used to generate a plurality of simulated anomaly states. However, the simulator used here is not limited to above example and any other simulator is well within the scope of the present disclosure.

For example, the subject matter expertise may be used to change at least one process parameter value and generate one or more simulated anomaly states through the simulator. The simulator may also be configured to generate projection of change in other process parameter values due to change in at least one process parameter value. In one non-limiting embodiment, the process parameter may be temperature, pressure, moisture, etc., associated with the industrial processes running the industrial plant.

In an embodiment, after all the potential anomaly states are identified, the next step is identification of potential 'recommendations' for each potential anomaly. Initially, all candidate anomaly resolution recommendations for each of the simulated and historical anomaly states are retrieved or determined based on the previously implemented anomaly resolutions and subject matter expertise, respectively.

As the reinforcement learning involves learning to take `correct actions' by maximizing `accumulating rewards', by minimizing `total amount of sub-optimal actions'. Similarly, the reinforcement learning based model may need to be trained to learns the best `resolution recommendation' (action) for given anomaly state, from a set of potential or possible `candidate anomaly resolution recommendations' (actions).

For the identification of the best `anomaly resolution recommendation', for a given anomaly state, the process is simulated by applying candidate recommendations in order to compare 'reward' or the 'result' of application of each candidate recommendation. Thus, candidate recommendations with best result or reward may be selected as the `best anomaly resolution recommendation'. In one non-limiting embodiment of the present disclosure, during the simulation of the candidate recommendations, the robustness of a candidate recommendation may also be tested by infusing disturbance in the process.

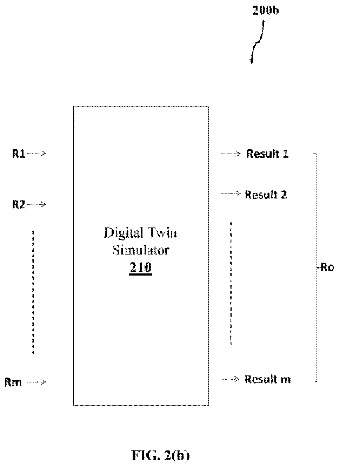

As shown in fig. 2(b), for a given anomaly state, a plurality of candidate recommendations R1, R2, R3, ..., Rm are provided to the digital twin simulator 210. The digital twin simulator 210 may be configured to project every tag value for each candidate recommendation. For example, the digital twin simulator 210 may be configured to generate result corresponding to each candidate recommendation. As shown, the Result 1 correspond to recommendation R1, Result 2 correspond to recommendation R2, and Result m correspond to recommendation Rm. The Result 1, Result 2, ... Result Rm may comprise changed parameter values due to the application of the said candidate recommendations. All the results are then compared to generate most optimum anomaly resolution recommendation 'Ro' for a given anomaly state. In an exemplary embodiment, the expression "Result" may have same meaning as "Reward Function" of reinforcement learning technique that is used for training the model. The expression "Result" and "Reward Function" may be alternatively used.

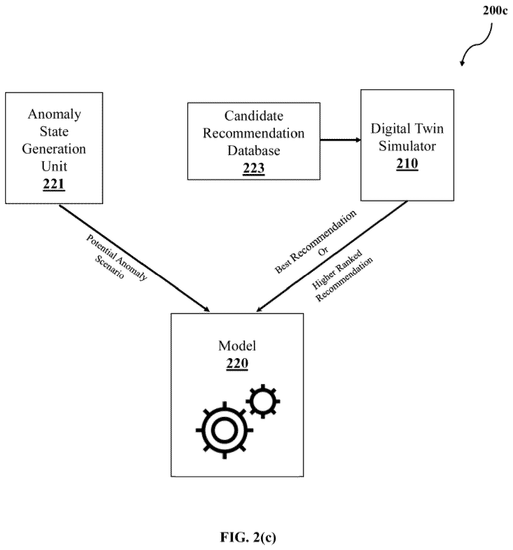

**FIG. 2(c)** illustrates block diagram 200c for training the reinforcement learning based machine learning model, in accordance with an embodiment of the present disclosure.

In an embodiment, anomaly state generation unit 221 may be configured generate as many potential anomaly states as possible for model 220. In an embodiment, the potential anomaly states of a process may be taken from multiple sources, as discussed in above embodiments.

The candidate recommendation database 223 may be configured to provide a plurality of candidate recommendations for each anomaly state, to the digital twin simulator 210 and the digital twin simulator 210 may generate result corresponding to each candidate recommendation, as shown in fig. 2(b).

In one non-limiting embodiment, projection of implementation results of all the candidate recommendation are compared to rank the candidate recommendations. Then, one or more higher ranked candidate recommendations may be selected for training the reinforcement learning based model 220.

Finally, in the training step of the model 220, the model 220 may be trained with one or more higher ranked candidate recommendations for a given anomaly state. Further, each higher ranked candidate recommendation may be assigned a criticality level, where a low criticality level indicates higher anomaly resolution capability and a high criticality level indicates lower anomaly resolution capability. In one non-limiting embodiment, the model 220 may be only trained with best anomaly resolution recommendation out of the one or more higher ranked candidate recommendations.

For example, the model 200 may be trained with most optimum anomaly resolution recommendation 'Ro' for a given anomaly such that each anomaly is mapped with the most optimum anomaly resolution recommendation.

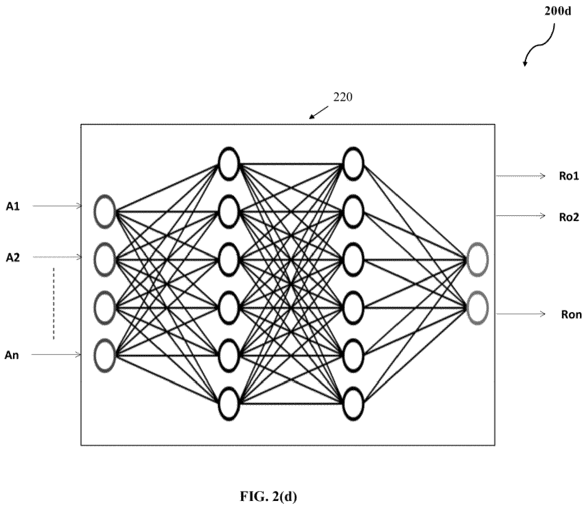

**FIG. 2(d)** illustrates optimum recommendation generation through reinforcement learning based model, in accordance with an embodiment of the present disclosure.

In an embodiment, the trained model 220 may be configured to provide optimum anomaly resolution recommendation (Ro1, Ro2, ... Ron) for the detected anomaly states (A1, A2, ... An), as the model is trained to learn the mapping between the anomaly states and the optimum anomaly resolution recommendations.

Thus, the trained reinforcement-based model provides at least one optimum anomaly resolution recommendation or best anomaly resolution recommendation along with associated criticality information for the remediation of the anomaly, where the criticality information indicates whether the optimum anomaly resolution recommendation or the best anomaly resolution recommendation are capable of restoring the process to its normal state.

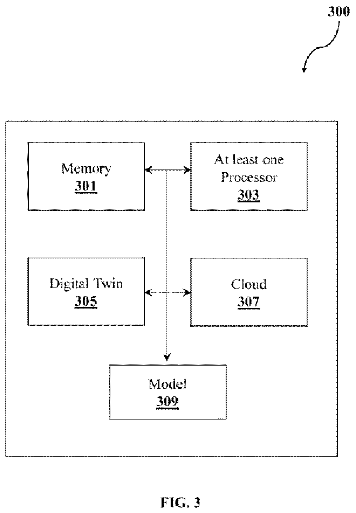

**FIG. 3** illustrates a block diagram representation of system 300 for anomaly remediation in an industrial process or equipment, in accordance with another embodiment of the present disclosure.

In an embodiment of the present disclosure, the system 300 may comprise a memory 301, at least one processor 303, Digital Twin 305, cloud 307, and a reinforcement learning based model 309 communicatively coupled with each other. In one non-limiting embodiment, the system 300 may also comprise an input or output module and communication interface (not shown).

It may be noted that, in some embodiments, the system 300 may include more or fewer components than those depicted herein. The various components of the system 300 may be implemented using hardware, software, firmware, or any combinations thereof. Further, the various components of the system 300 may be operably coupled with each other. More specifically, various components of the system 300 may be capable of communicating with each other using communication channel media (such as buses, interconnects, etc.).

In one embodiment, the at least one processor 303 may be embodied as a multi-core processor, a single core processor, or a combination of one or more multi-core processors and one or more single core processors. For example, the processor 303 may be embodied as one or more of various processing devices, such as a coprocessor, a microprocessor, a controller, a digital signal processor (DSP), a processing circuitry with or without an accompanying DSP, or various other processing devices including, a microcontroller unit (MCU), a hardware accelerator, a special-purpose computer chip, or the like.

In one embodiment, the memory 301 is capable of storing machine executable instructions, referred to herein as instructions. In an embodiment, the at least one processor 303 is embodied as an executor of software instructions. As such, the at least one processor 303 is capable of executing the instructions stored in the memory 301 to perform one or more operations described herein.

The memory 301 can be any type of storage accessible to the at least one processor 303 to perform respective functionalities. For example, the memory 301 may include one or more volatile or non-volatile memories, or a combination thereof. For example, the memory 301 may be embodied as semiconductor memories, such as flash memory, mask ROM, PROM (programmable ROM), EPROM (erasable PROM), RAM (random access memory), etc. and the like.

In an embodiment, the model 309 may be configured in the internal memory or storage and a processing unit for determining at least one optimum anomaly resolution recommendation for a detected anomaly. Some examples of the model 309 may include, but not limited to, arithmetic model, neural network, deep neural networks, Machine Learning (ML) model, reinforcement learning based ML model, and the like.

In an embodiment of the present disclosure, the memory 301, at least one processor 303, and the model 309 may perform all the functionalities of the monitoring unit 101, anomaly detection unit 103, and the recommendation unit 105.

The at least one processor 303 may be configured to monitor, in real-time, a plurality of parameters associated with the industrial process or equipment in an industrial plant. The at least one processor 303 may be in communication with a plurality of sensors deployed for monitoring the parameters of the process or equipment. In one-non limiting embodiment, the at least one processor 303 may monitor the streamed data from the plurality of sensors.

The at least one processor 303 may be then configured to detect at least one anomaly based on the plurality of parameters associated with industrial process or equipment. The detection may include comparison of the each parameter value with respective threshold value or range and detecting a deviation in parameter value from its respective threshold value or range. The respective threshold value or range may be stored in memory 301 or may be retrieved from the cloud 307. The detected deviating may be treated as anomaly. In one non-limiting embodiment, an alert may be generated to report the detected anomaly to the process operator or process administrator. Further, the consequences of the detected anomaly may be projected to the process operator.

The at least one processor 303 may be then configured to determine at least one optimum anomaly resolution recommendation from the plurality of candidate anomaly resolution recommendations based on a model, in response to detection of the at least one anomaly. Each optimum anomaly resolution recommendation may comprise updated value of one or more parameters associated with the industrial process or equipment. In one non-limiting embodiment, the at least one optimum anomaly resolution recommendation may be provided with or without prior training of the model.

To determine the at least one optimum anomaly resolution recommendation from the plurality of anomaly resolution candidate recommendations, the at least one processor 303 may be configured to compare a projection of implementation results of the plurality of candidate anomaly resolution recommendations corresponding to the at least one detected anomaly, rank the plurality of candidate anomaly resolution recommendations based on the projection of implementation results, and provide one or more higher ranked candidate anomaly resolution recommendations as optimum anomaly resolution recommendation, for the at least one detected anomaly.

The at least one processor 303 may be then configured to provide the at least one optimum anomaly resolution recommendation along with associated criticality information for the remediation of the at least one anomaly. The criticality information may at least comprise projection of implementation results corresponding to respective optimum recommendation. In one non-limiting embodiment, the at least one processor 303 may also provide projection result of the process without implementation of the anomaly resolution recommendation to allow the process operator to make the necessary decision of accepting or rejecting the anomaly resolution recommendation.

In an embodiment, the at least one processor 303 may be then configured to assign a criticality level to the at least one optimum anomaly resolution recommendation. The low criticality level indicates higher anomaly resolution capability and the high criticality level indicates lower anomaly resolution capability. The at least one processor 303 may be then configured to accept or reject the at least one optimum anomaly resolution recommendation at least based on the criticality level. In one non-limiting embodiment, the decision of acceptance or rejection of the at least one optimum anomaly resolution recommendation may be on process operator.

In an embodiment of the present disclosure, the at least one processor 303 may be configured to train the model 309. For training the model 309, the at least one processor 303 may be configured to carry out following procedure.

The at least one processor 303 may be configured to generate a plurality of simulated anomaly states for the industrial process or equipment using a digital twin. The plurality of simulated anomaly states based on subject matter expertise. The generation of the plurality of simulated anomaly states may comprise altering one or more process parameters based on the subject matter expertise.

Then, the at least one processor 303 may be configured to retrieve historical anomaly states associated with the industrial process or equipment. The historical anomaly states associated with the industrial process or equipment may either retrieved from the memory 301 or from the cloud 307. Further, the at least one processor 303 may be configured to gather a plurality of candidate anomaly resolution recommendations for each of the plurality of simulated and historical anomaly states at least based on the subject matter expertise and previously implemented anomaly resolutions.

The at least one processor 303 may be then configured to apply the plurality of candidate anomaly resolution recommendations to the digital twin 305 to generate implementation results. The digital twin 305 may also be configured to provide projection of implementation results of each candidate anomaly resolution recommendation.

The at least one processor 303 may be then configured to train the model based on the plurality of candidate anomaly resolution recommendations and the implementation results, for resolution of each of the plurality of simulated and historical anomaly states. In one non-limiting embodiment, the at least one processor 303 may train the model based on one or more higher ranked candidate anomaly resolution recommendations, which have the lower criticality level. In another non-limiting embodiment, the at least one processor 303 may train the model based on most optimum or best candidate anomaly resolution recommendation out of the plurality of candidate anomaly resolution recommendations, which has the lowest criticality level.

Thus, the trained model provides at least one optimum anomaly resolution recommendation along with associated criticality information for the remediation of the anomaly, which indicates whether the optimum anomaly resolution recommendation is capable of restoring the process to its normal state.

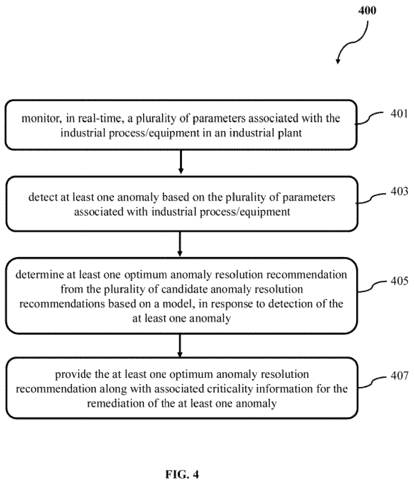

**FIG. 4** is a flowchart illustrating a method 400 for anomaly remediation in an industrial process or equipment, in accordance with an embodiment of the present disclosure.

The method 400 depicted in the flow diagram may be performed by, for example, the at least one processor 303 shown in Fig. 3. Operations of the flow diagram, and combinations of operation in the flow diagram, may be implemented by, for example, hardware, firmware, a processor, circuitry and or or a different device associated with the execution of software that includes one or more computer program instructions. The operations of the method 400 may also be performed by the monitoring unit 101, the anomaly detection unit 103, and the recommendation unit 105 shown in fig. 1. It is noted that the operations of the method 400 can be described and or or practiced by using one or more processors of a system or device other than discussed in above embodiments.

At step 401, the method 400 discloses monitoring, in real-time, a plurality of parameters associated with the industrial process or equipment in an industrial plant. The at least one processor 303 may be in communication with a plurality of sensors deployed for monitoring the parameters of the process or equipment. In one-non limiting embodiment, the at least one processor 303 may monitor the streamed data from the plurality of sensors.

At step 403, the method 400 discloses detecting at least one anomaly based on the plurality of parameters associated with industrial process or equipment. The detection may include comparison of the each parameter value with respective threshold value or range and detecting a deviation in parameter value from its respective threshold value or range. The respective threshold value or range may be stored in memory or may be retrieved from the cloud. The detected deviating may be treated as anomaly. In one non-limiting embodiment, the method step 403 may also comprise generating an alert to report the detected anomaly to the process operator or process administrator. Further, the consequences of the detected anomaly may be projected to the process operator.

At step 405, the method 400 discloses determining at least one optimum anomaly resolution recommendation from the plurality of candidate anomaly resolution recommendations based on a model, in response to detecting the at least one anomaly. Each optimum anomaly resolution recommendation may comprise updated value of one or more parameters associated with the industrial process or equipment. In one non-limiting embodiment, the at least one optimum anomaly resolution recommendation may be provided with or without prior training of the model.

For determining the at least one optimum anomaly resolution recommendation from the plurality of anomaly resolution candidate recommendations, the method 400 discloses comparing a projection of implementation results of the plurality of candidate anomaly resolution recommendations corresponding to the at least one detected anomaly, ranking the plurality of candidate anomaly resolution recommendations based on the projection of implementation results, and providing one or more higher ranked candidate anomaly resolution recommendations as optimum anomaly resolution recommendation, for the at least one detected anomaly.

At step 407, the method 400 discloses providing the at least one optimum anomaly resolution recommendation along with associated criticality information for the remediation of the at least one anomaly. The criticality information may at least comprise projection of implementation results corresponding to respective optimum recommendation. In one non-limiting embodiment, the at least one processor 303 may also provide projection result of the process without implementation of the anomaly resolution recommendation to allow the process operator to make the necessary decision of accepting or rejecting the anomaly resolution recommendation.

In an embodiment, the method 400 may further comprise assigning a criticality level to the at least one optimum anomaly resolution recommendation. The low criticality level indicates higher anomaly resolution capability and the high criticality level indicates lower anomaly resolution capability. Then, the method 400 may comprise accepting or rejecting the at least one optimum anomaly resolution recommendation at least based on the criticality level. In one non-limiting embodiment, the decision of acceptance or rejection of the at least one optimum anomaly resolution recommendation may depend on process operator.

Thus, the method 400 provides at least one optimum anomaly resolution recommendation along with associated criticality information for the remediation of the anomaly, which indicates whether the optimum anomaly resolution recommendation is capable of restoring the process to its normal state.

The disclosed method with reference to FIG. 4, or one or more operations of the flow diagram 400 may be implemented using software including computer-executable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

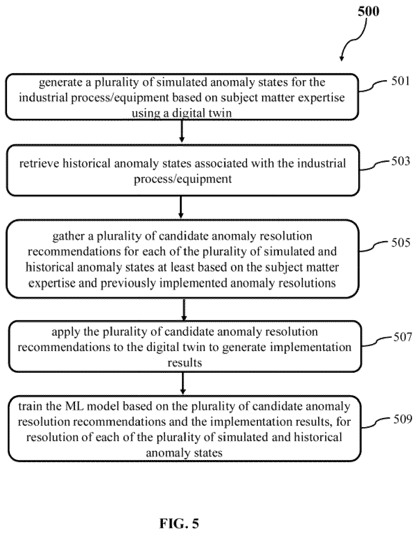

**FIG.** 5 is a flowchart illustrating a method 500 of training the model for anomaly resolution recommendation, in accordance with an embodiment of the present disclosure.

The method 500 depicted in the flow diagram may be performed by, for example, the at least one processor 303 shown in Fig. 3. Operations of the flow diagram, and combinations of operation in the flow diagram, may be implemented by, for example, hardware, firmware, a processor, circuitry and or or a different device associated with the execution of software that includes one or more computer program instructions. The operations of the method 500 may also be performed by the monitoring unit 101, the anomaly detection unit 103, and the recommendation unit 105 shown in fig. 1. It is noted that the operations of the method 500 can be described and or or practiced by using one or more processors of a system or device other than discussed in above embodiments.

At step 501, the method 500 discloses generating a plurality of simulated anomaly states for the industrial process or equipment using a digital twin. The plurality of simulated anomaly states based on subject matter expertise. The generation of the plurality of simulated anomaly states may comprise altering one or more process parameters based on the subject matter expertise.

At step 503, the method 500 discloses retrieving historical anomaly states associated with the industrial process or equipment. The historical anomaly states associated with the industrial process or equipment may either retrieved from the memory 301 or from the cloud 307.

At step 505, the method 500 discloses gathering a plurality of candidate anomaly resolution recommendations for each of the plurality of simulated and historical anomaly states at least based on the subject matter expertise and previously implemented anomaly resolutions. The plurality of candidate anomaly resolution recommendations for each of the plurality of simulated and historical anomaly states may be gather from the memory or cloud.

At step 507, the method 500 discloses applying the plurality of candidate anomaly resolution recommendations to the digital twin 305 to generate implementation results. The digital twin 305 may also be configured to provide projection of implementation results of each candidate anomaly resolution recommendation.

At step 509, the method 500 discloses training the model based on the plurality of candidate anomaly resolution recommendations and the implementation results, for resolution of each of the plurality of simulated and historical anomaly states. In one non-limiting embodiment, the at least one processor 303 may train the model based on one or more higher ranked candidate anomaly resolution recommendations, which have the lower criticality level. In another non-limiting embodiment, the at least one processor 303 may train the model based on most optimum or best candidate anomaly resolution recommendation out of the plurality of candidate anomaly resolution recommendations, which has the lowest criticality level.

Thus, the training the model for providing at least one optimum anomaly resolution recommendation along with associated criticality information for the remediation of the anomaly, which indicates whether the optimum anomaly resolution recommendation is capable of restoring the process to its normal state.

The disclosed method with reference to FIG. 5, or one or more operations of the flow diagram 500 may be implemented using software including computer-executable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

Various embodiments of the present disclosure provide numerous advantages. Embodiments of the present disclosure provide a system for analyzing cybersecurity postures for an operation technology infrastructure. In addition, the present disclosure provides the system for generating a prioritization sequence for remediation of one or more vulnerable components of each plant.

It will be understood by those within the art that, in general, terms used herein, and are generally intended as "open" terms (e.g., the term "including" should be interpreted as "including but not limited to," the term "having" should be interpreted as "having at least," the term "includes" should be interpreted as "includes but is not limited to," etc.). For example, as an aid to understanding, the detail description may contain usage of the introductory phrases "at least one" and "one or more" to introduce recitations. However, the use of such phrases should not be construed to imply that the introduction of a recitation by the indefinite articles "a" or "an" limits any particular part of description containing such introduced recitation to inventions containing only one such recitation, even when the introductory phrases "one or more" or "at least one" and indefinite articles such as "a" or "an" (e.g., "a" and or or "an" should typically be interpreted to mean "at least one" or "one or more") are included in the recitations; the same holds true for the use of definite articles used to introduce such recitations. In addition, even if a specific part of the introduced description recitation is explicitly recited, those skilled in the art will recognize that such recitation should typically be interpreted to mean at least the recited number (e.g., the bare recitation of "two recitations," without other modifiers, typically means at least two recitations or two or more recitations).

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following detailed description.

**Referral Numerals:**

| **Referral Number** | **Description** |
|---|---|
| 100 | Environment |
| 101 | Monitoring Unit |
| 103 | Anomaly Detection Unit |
| 105 | Recommendation Unit |
| 200 | Stages |
| 201, 203, 205 | Stage |
| 210 | Digital Twin Simulator |
| 220 | Reinforced learning-based model |
| 300 | System |
| 301 | Memory |
| 303 | At least one Processor |
| 305 | Digital Twin Simulator |
| 307 | Cloud |
| 309 | Model |
| 400 | Method |
| 401 - 407 | Method steps |
| 500 | Method |
| 501-509 | Method steps |

## Claims

1. A method for anomaly remediation in an industrial process or equipment, the method comprising:
monitoring, in real-time, a plurality of parameters associated with the industrial process or equipment in an industrial plant;
detecting at least one anomaly based on the plurality of parameters associated with industrial process or equipment;
in response to detecting the at least one anomaly, determining at least one optimum anomaly resolution recommendation from plurality of candidate anomaly resolution recommendations based on a model; and
providing the at least one optimum anomaly resolution recommendation along with associated criticality information for the remediation of the at least one anomaly, wherein the criticality information at least comprises projection of implementation results corresponding to respective optimum recommendation.

2. The method as claimed in claim 1, further comprising:
generating a plurality of simulated anomaly states for the industrial process or equipment based on subject matter expertise using a digital twin;
retrieving historical anomaly states associated with the industrial process or equipment;
gathering a plurality of candidate anomaly resolution recommendations for each of the plurality of simulated and historical anomaly states at least based on the subject matter expertise and previously implemented anomaly resolutions;
applying the plurality of candidate anomaly resolution recommendations to the digital twin to generate implementation results; and
training the model based on the plurality of candidate anomaly resolution recommendations and the implementation results, for resolution of each of the plurality of simulated and historical anomaly states.

3. The method as claimed in claim 1 or 2, wherein determining at least one optimum anomaly resolution recommendation from the plurality of anomaly resolution candidate recommendations:
comparing a projection of implementation results of the plurality of candidate anomaly resolution recommendations corresponding to the at least one detected anomaly; and
ranking the plurality of candidate anomaly resolution recommendations based on the projection of implementation results; and
providing one or more higher ranked candidate anomaly resolution recommendations as optimum anomaly resolution recommendation, for the at least one detected anomaly.

4. The method as claimed in any of the previous claims, wherein each optimum anomaly resolution recommendation comprises updated value of one or more parameters associated with the industrial process or equipment.

5. The method as claimed in any of the previous claims, further comprising:
assigning a criticality level to the at least one optimum anomaly resolution recommendation, wherein a low criticality level indicates higher anomaly resolution capability and a high criticality level indicates lower anomaly resolution capability; and
accepting or rejecting the at least one optimum anomaly resolution recommendation at least based on the criticality level.

6. A system for anomaly remediation in an industrial process or equipment, the system comprising:
a memory;
at least one processor coupled to the memory, wherein the at least one processor is configured to:
monitor, in real-time, a plurality of parameters associated with the industrial process or equipment in an industrial plant;
detect at least one anomaly based on the plurality of parameters associated with industrial process or equipment;
in response to detection of the at least one anomaly, determine at least one optimum anomaly resolution recommendation from plurality of candidate anomaly resolution recommendations based on a model; and
provide the at least one optimum anomaly resolution recommendation along with associated criticality information for the remediation of the at least one anomaly, wherein the criticality information at least comprises projection of implementation results corresponding to respective optimum recommendation.

7. The system as claimed in claim 6, wherein the at least one processor is configured to:
generate a plurality of simulated anomaly states for the industrial process or equipment based on subject matter expertise using a digital twin;
retrieve historical anomaly states associated with the industrial process or equipment;
gather a plurality of candidate anomaly resolution recommendations for each of the plurality of simulated and historical anomaly states at least based on the subject matter expertise and previously implemented anomaly resolutions;
apply the plurality of candidate anomaly resolution recommendations to the digital twin to generate implementation results; and
train the model based on the plurality of candidate anomaly resolution recommendations and the implementation results, for resolution of each of the plurality of simulated and historical anomaly states.

8. The system as claimed in claim 6 or 7, wherein to determine at least one optimum anomaly resolution recommendation from the plurality of anomaly resolution candidate recommendations, the at least one processor is configured to:
compare a projection of implementation results of the plurality of candidate anomaly resolution recommendations corresponding to the at least one detected anomaly; and
rank the plurality of candidate anomaly resolution recommendations based on the projection of implementation results; and
provide one or more higher ranked candidate anomaly resolution recommendations as optimum anomaly resolution recommendation, for the at least one detected anomaly.

9. The system as claimed in any of the claims 6-8, wherein each optimum anomaly resolution recommendation comprises updated value of one or more parameters associated with the industrial process or equipment.

10. The system as claimed in any of the claims 6-9, wherein the at least one processor is configured to:
assign a criticality level to the at least one optimum anomaly resolution recommendation, wherein a low criticality level indicates higher anomaly resolution capability and a high criticality level indicates lower anomaly resolution capability; and
accept or reject the at least one optimum anomaly resolution recommendation at least based on the criticality level.
